# EUROPEAN PATENT APPLICATION

(11) **EP 3 086 243 A1**
(43) Date of publication of application: **26.10.2016**
(21) Application number: 16162324.4
(22) Date of filing: 24.03.2016
(51) Int. Cl.: G06F 17/30

(54) **A COMPUTER APPARATUS ARRANGED TO UPDATE A FILE OF DATA AND A METHOD AND A PROGRAM THEREFOR**

(30) Priority: 26.03.2015 GB 201505135
(71) Applicant: FUJITSU LIMITED, Kawasaki-shi, Kanagawa 211-8588 (JP)
(72) Inventor: NASEER BUTT, Aisha, Hayes, Middlesex UB4 8LB (GB); TERUNOBU, Kume, Kawasaki-shi, Kanagawa 211-8588 (JP)
(74) Representative: Wilding, Frances Ward

(57) **Abstract**

A computer apparatus arranged to update a file of data having a subject-predicate-object triplet structure using a new file in a compact format, the compact format defining subjects, predicates and objects in a structure which defines triplets without explicitly listing the subject, predicate and object in each triplet, the computer apparatus comprising:
a format translation module arranged to carry out pre-processing to convert the new file in the compact format into an expanded format which always lists each separate subject-predicate-object triplet explicitly including the subject, predicate and object of the triple; and to divide the triples in the expanded format into sets, with one set for each subject; and
a counting and updating module arranged to count the triples in each set to produce a new triple count for that set; to compare the new triple count for each set with a previous triple count for the same set in the file and to update the data in any set of the file if there is a difference between the new and the previous triple count, and not update any set of the file if there is no difference between the new triple count and the previous triple count.

## Description

The present invention relates to a method of updating data, particularly LOD data. It has broad technical applications in data management.

Open Linked Data (LOD) is a paradigm in which linked data from a variety of sources is made available to applications, thus, for the purposes of this document, "linked data" and "Open Linked Data" or "LOD" may be used more or less interchangeably.

At the heart of LOD is the Resource Description Framework, RDF, a simple graph-based data-modelling language providing semantic mark-up of data. With RDF, LOD tries to piece data silos together and transform the current archipelagic data landscape into a connected data graph upon which complicated data analytics and business intelligence applications can be built.

Graph databases store data in the form of nodes and arcs, where a node represents an entity or instance, and an arc represents a relationship of some type between any two nodes. In an undirected graph, an arc from node A to node B is considered to be the same as an arc from node B to node A. In a directed graph, the two directions are treated as distinct arcs.

Graph databases can be used to maintain large "semantic networks" that can store large amounts of structured and unstructured data in various fields. A semantic network is used as a form of knowledge representation and is a directed graph consisting of nodes that represent concepts, and arcs that represent semantic relationships between the concepts.

There are several types of graph representations. Graph data may be stored in memory as multidimensional arrays, or as symbols linked to other symbols. Another form of graph representation is the use of "tuples," which are finite sequences or ordered lists of objects, each of a specified type. A tuple containing n objects is known as an "n-tuple," where n can be any non-negative integer greater than zero. A tuple of length 2 (a 2-tuple) is commonly called a pair, a 3 -tuple is called a triple, a four-tuple is called a quadruple, and so on. Triples are the most commonly used tuples.

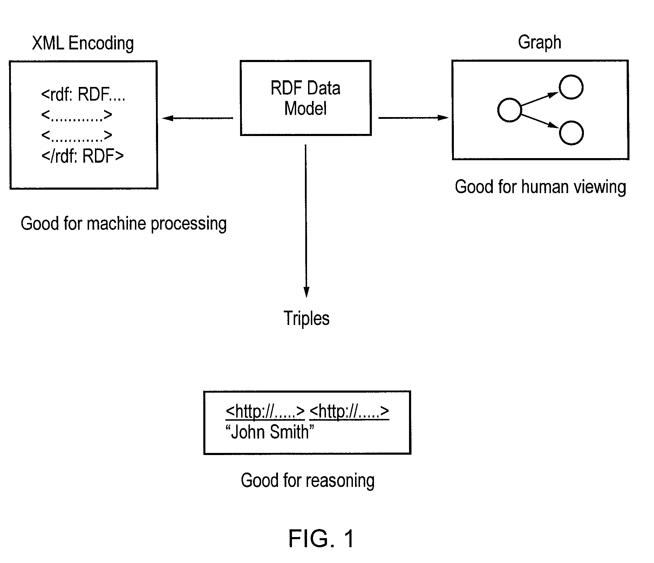

Optionally, triples may be Resource Description Framework (RDF) triples. The Resource Description Framework (RDF) is a schema embodying a general method for conceptual description or modelling of information that is a standard for semantic networks. It can be represented in a number of different ways. Figure 1 shows how the RDF data model encompasses Extensible Markup Language XML encoding, which is good for machine processing, triples, which are good for reasoning, and graphs, which are good for human viewing.

Throughout this document, it should be understood that where specific references to "RDF triple(s)" are made, it is an exemplary form of triple, conforming to the RDF standard. Furthermore, references to "triple(s)" include the possibility that the triple in question is an RDF triple.

The triples provide for encoding of graph data by characterising the graph data as a plurality of subject-predicate-object expressions. In that context, the subject and object are graph nodes of the graph data, and as such are entities, objects, instances, or concepts, and the predicate is a representation of a relationship between the subject and the object. The predicate asserts something about the subject by providing a specified type of link to the object. For example, the subject may denote a Web resource (for example, via a uniform Resource Identifier, URI), the predicate denote a particular trait, characteristic, or aspect of the resource (possibly also a URI), and the object denote an instance of that trait, characteristic, or aspect (possibly also a URI). In other words, a collection of triple statements intrinsically represents directional graph data. The RDF standard provides formalised structure for such triples.

Notations, or N3 is a simplified language which is essentially equivalent to XML in its syntax, but is easier to write and understand. N3 has several features that extend the RDF model, thus is not limited to RDF implementation .

Some versions of N3 include "syntactic sugar" or "shortcut syntax" which can make it easier to read and/or shorter to represent. For example, there may be two shortcuts for giving a compact format when there are several statements about the same subject. A semicolon (or new line) can introduce another property of the same subject and a comma can introduce another object with the same predicate and subject. Such shortcuts aid readability and writeability of this format. They can be used together.

For more information on N3, the reader is referred to http://www.w3.org/TeamSubmission/n3 - "Notation3 (N3): A readable RDF syntax", and http:/www.w3.org/2000/10/Swap/Primer - "Primer: Getting into RDF & Semantic Web Using N3".

Another example of a language which uses triples is Turtle (Terse RDF Triple Language). In fact, Turtle is a simplified RDF-only subset of N3, which can omit part of the triple and thus have a compact format.

N-Triples is an alternative format, which was designed to be a simpler format than Notation 3 and Turtle, and therefore easier for software to parse and generate. However, because it lacks some of the shortcuts provided by other RDF serialisations, N-Triples can make it onerous to type out large amounts of data by hand, and this format can be difficult to read. In N-Triples, each line of the file has either the form of a comment or of a statement. An N-Triples statement consists of three parts, separated by white space: the subject, the predicate and the object, and is terminated with a full stop. N-Triples can omit the subject, predicate or object (and thus have a compact format).

The XML encoding of RDF (RDF-XML) mentioned above is a format which is good for machine reading and can also have a compact format, for example it can omit rementioning the subject when the same subject is repeated in a new triple.

Conducting bulk update on LOD datasets is a challenging task and requires enormous amount of time due to the massive volumes of data (in terms of billions of triples). This hinders the performance of systems, since it can take up to several days to update a particular dataset triple by triple. In most cases, not all the triples require updating from the original version. Perhaps only one or two need to be updated; so apparently, the update required in the triple store may be very small in comparison to the amount of processing required to effect it. However, and especially given the variety of formats explained above, there is no current solution to figure out the information about only the specific triples that need updating.

An embodiment of one aspect of the present invention provides a computer apparatus arranged to update a file of data having a subject-predicate-object triplet structure using a new file in a compact format, the compact format defining subjects, predicates and objects in a structure which defines triplets without explicitly listing the subject, predicate and object in each triplet. Hence the file may be in a version of N3, for example, which can omit the subject and/or object and/or predicate in an individual triplet to provide a compact format. The omission may have been achieved, for instance, by using shortcut syntax to combine two or more triplets together which have the same subject and/or predicate and/or object, to retain the same information as full triplets, but in a more compact form.

The computer apparatus can comprise: a format translation module arranged to carry out pre-processing to convert the new file in the compact format into an expanded format which always lists each separate subject-predicate-object triplet explicitly including the subject, predicate and object of the triple; and to divide the triples in the expanded format into sets, with one set for each subject; and a counting and updating module arranged to count the triples in each set to produce a new triple count for that set; to compare the new triple count for each set with a previous triple count for the same set in the file and to update the data in any set of the file if there is a difference between the new and the previous triple count, and not update any set of the file if there is no difference between the new triple count and the previous triple count.

The computer apparatus may also comprise a crawler module arranged to obtain the new file in the compact format.

The computer apparatus may be a local computer, such as a PC, or a server, and may access the new file over the internet, for example using the web crawler. The new file may be stored on an LOD cloud, as a single file or (more likely) in various files and/or locations. The file which is updated may be stored locally or externally, such as on the cloud. It is preferably already in the expanded format.

The compact and converted (explicit) formats of the file may be any format which matches the definition given above. In some embodiments, both formats are N3 or RDF-XML type formats. Both versions of the file need to be in the same language.

The triple count may be any suitable count of triples or their contents. Preferably, the triple count for one set is the number of triples associated with the same subject, and thus in one set. Each triple may be constituted of only 3 URIs (1xsubject; 1xpredicate; 1xobject). If there is more than one predicate or object associated with the same subject then it is a separate triple and should be counted +1. Several such triples, with essentially the same subject make up a set, for that particular subject. The triple count is simple the total number of triples. If there is one triple per line, then the number of lines can be counted. The triple count for a set is the total number of triples in that set with the same subject.

Preferably, the previous triple count is held in a triple count store. The triple count may be updated (for example once the set being processed has been updated, or after all the updates) to reflect any updates to the sets in the file. This allows the triple count store to be aligned with the updated file, which may be stored to replace the file.

There may be various shortcuts in the compact format which may be translated/converted to provide the expanded format (using knowledge of shortcut syntax). A particular file for conversion may include any or all of these shortcuts and thus any or all of the conversion checks and remedies detailed below may be carried out. Also, there may be other issues not associated with the compact nature of the format (such as duplication or abbreviations) which the conversion can also resolve. Hence even if the new file is not in a compact format, there can be some benefit in using the format translation module to eliminate such issues.

In one embodiment, the conversion checks for and remedies omitted subjects, for example where a new line and/or semicolon introduces a new predicate and object for the same subject. In this case, the remedy may be to add the subject where it has been omitted.

In another embodiment, the conversion checks for and remedies multiple objects, for example where a comma separates two or more objects with the same subject and predicate. In this case, the remedy may be to put each of the multiple objects into a separate line and add the same subject and predicate to it.

In another embodiment, the conversion checks for and remedies multiple objects in one line without a subject, for example where a new line introduces a new predicate for the same subject, followed by a two or more objects in the same line (and with the same subject and predicate). In this case, the remedy may be to put each object into a separate line and add the same subject and new predicate to it.

In another embodiment, the conversion checks for and remedies a format in which the instances of the same subject are separated by instances of one or more other subject. In this case, the remedy may be to sort the file by subject (for example before division into sets and to facilitate the process of division into sets).

In another embodiment, the conversion checks for and remedies overlap triples (two or more instances of the same triple) which are discarded to leave one remaining triple before comparing the new triple count for each set with the previous triple count for that set.

The computer apparatus may be arranged to download the new file (or dataset) for comparison to the file (or dataset) to be updated, which may be locally stored.

An embodiment of another aspect of the present invention provides a computer-implemented method of updating a file of data having a subject-predicate-object triplet structure using a new file in a compact format, the compact format defining subjects, predicates and objects in a structure which defines triplets without explicitly listing the subject, predicate and object in each triplet.

The method may comprise pre-processing to convert the new file in the compact format into an expanded format which always lists each separate subject-predicate-object triplet explicitly including the subject, predicate and object of the triple; dividing the triples in the expanded format into sets, with one set for each subject; counting the triples in each set to produce a new triple count for that set; comparing the new triple count for each set with a previous triple count for the same set in the file and updating the data in any set of the file if there is a difference between the new and the previous triple count, and not updating any set of the file if there is no difference between the new triple count and the previous triple count.

At the end of the method the updated file may be stored and the new file may be discarded.

An embodiment of another aspect of the present invention provides a computer program which when executed carries out a computer-implemented method of updating a file of data having a subject-predicate-object triplet structure using a new file in a compact format, the compact format defining subjects, predicates and objects in a structure which defines triplets without explicitly listing the subject, predicate and object in each triplet; the method comprising pre-processing to convert the new file in the compact format into an expanded format which always lists each separate subject-predicate-object triplet explicitly including the subject, predicate and object of the triple; dividing the triples in the expanded format into sets, with one set for each subject; counting the triples in each set to produce a new triple count for that set; comparing the new triple count for each set with a previous triple count for the same set in the file and updating the data in any set of the file if there is a difference between the new and the previous triple count, and not updating any set of the file if there is no difference between the new triple count and the previous triple count.

More than one computer program may be provided to carry out the method. For example, a set of computer programs may include a program to provide the format translation module and a program to provide the counting and update module.

The invention can be implemented in digital electronic circuitry, or in computer hardware, firmware, software, or in combinations of them. The invention can be implemented as a computer program or computer program product, i.e., a computer program tangibly embodied in an information carrier, e.g., in a machine-readable storage device or in a propagated signal, for execution by, or to control the operation of, one or more hardware modules. A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network.

Method steps of the invention can be performed by one or more programmable processors executing (a) computer program(s) to perform functions of the invention by operating on input data and generating output. Apparatus of the invention can be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer apparatus are a processor for executing instructions coupled to one or more memory devices for storing instructions and data.

Test scripts and script objects can be created in a variety of computer languages. Representing test scripts and script objects in a platform independent language, e.g., Extensible Markup Language (XML), allows one to provide test scripts that can be used on different types of computer platforms.

The invention is described in terms of particular embodiments. Other embodiments are within the scope of the following claims. For example, the steps of the invention can be performed in a different order and still achieve desirable results. Multiple test script versions can be edited and invoked as a unit without using object-oriented programming technology; for example, the elements of a script object can be organized in a structured database or a file system, and the operations described as being performed by the script object can be performed by a test control program.

A method according to preferred embodiments of the present invention can comprise any combination of the previous apparatus aspects. Methods according to any embodiments can be described as computer-implemented in that they require processing and memory capability.

The apparatus and functional modules therein according to preferred embodiments are described as configured or arranged to carry out certain functions. This configuration or arrangement could be by use of hardware or middleware or any other suitable methodology. In preferred embodiments, the configuration or arrangement is by software, and the modules are software modules.

According to a further aspect there is provided a program which when loaded onto a computer apparatus or system configures the apparatus to carry out the method steps according to any of the preceding method definitions or any combination thereof.

In general the hardware mentioned may comprise the modules listed as being configured or arranged to provide the functions defined. For example this hardware may include memory, processing, and communications circuitry to connect the apparatus (local hardware apparatus) to the internet/ cloud.

Elements of the invention may be described using the term "module". The skilled person will appreciate that this term and its equivalents may refer to parts of the apparatus that are spatially separate but combine to serve the function defined. Equally, the same physical parts of the system may provide two or more of the functions defined. For example, separately defined modules may be implemented using the same memory and/or processor as appropriate.

Non-limiting and exemplary embodiments of the invention will now be described with reference to the appended figures, in which:
Figure 1 (previously described) is a schematic overview of the RDF data model;
Figure 2 is a flow chart showing an overview embodiment of the invention;
Figure 3 is a schematic hardware diagram showing a system according to invention embodiments;
Figure 4 is a module diagram of an invention embodiment;
Figure 5 is a flowchart of a format translation mechanism according to an invention embodiment;
Figure 6 is a flow chart showing a triple count mechanism with specific steps; and
Figure 7 is an example of a smart update for LOD datasets according to an invention embodiment.

Embodiments of the present invention can provide a computer apparatus, a method and a computer program to perform smart update of datasets, for example datasets on the Linked Open Data (LOD) cloud. A count of URI's/triples is disclosed as a way of allowing the smart updating.

The embodiments can deal with two technical aspects: format translation and triple count, to conduct URI-based counting of the triples in the dataset to highlight any new (or deleted) triples before conducting an update of the dataset.

The following description relates to N3 files, but is applicable analogously to other formats which include possible formatting issues that need to be resolved and/or "syntactic sugar" which requires translation for easy comparison with files which are expressed using more straightforward or explicit syntax.

Embodiments of the invention can use three key functions:
- Format translation - to handle any format problems in the N3 formatted file, check the file to recognise meanings of abbreviations using N3 formatting rules (which the computer apparatus must have stored or accessible) and to complement (add in) any omitted parts.
- URI-based triple count - to compare the old and new N3 files to assess the difference
- part update function - to update only the triples where the difference of count is not zero.

Some of the key innovations can be seen in the following aspects of various invention embodiments.

Embodiments may provide a mechanism that enables format translation of the N3 formatted (or other format) file. Embodiments may provide a mechanism that enables URI-based counting of triples to ensure efficient update. Finally, embodiments may provide a mechanism that enables part update of the LOD dataset and/or that suggests 'no update' in the case of no difference (between two counts of an old dataset to be updated and a new dataset).

The inventors have identified the following inefficiencies in the state-of-the-art.
- It is difficult to count triples against some N3 formatted files (and equivalents in other languages)
- The current bulk update used to update many datasets may not be required
- Efficient update is needed when dealing with massive volumes of data

The inventors have come to the realisation that a URI-based or triple-count based update of triples may be appropriate.

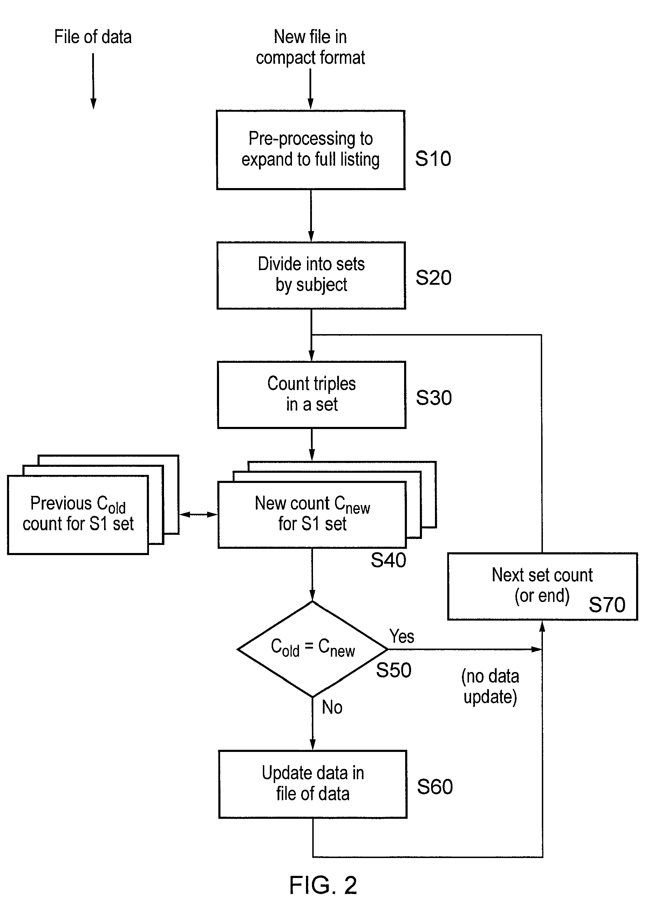

Figure 2 is a flowchart of a general embodiment of the invention, which may be carried out locally using a web link. The embodiment reads in a new file. In step S10, there is pre-processing to expand the compact format into a full listing. This step can also remove malformed data, such as repeated triples, whether the format is compact or not.

In step S20, the expanded/corrected file is divided into sets by subject. In step S30 there is a triple count for a set, for example counting the number of URI's for the first subject (i.e. the first set in the file).

In step S40 the new triple count for the first set is compared with the previous count for that set in the (old) file. In step 50 it is determined whether the count is the same and if so there is no data update, since the set in the file and new file are assumed to be the same. In this case, the process continues with step S70 which increments the set in consideration to the next set, or finishes the method if there are no more sets to be processed. If the count is different in step S50, there is a data update for that set only in the data file in step S60, and then the process continues with step S70.

In a slight variant of this embodiment, rather than the whole counting and updating process being carried out together and set by set, the number in every set could be counted before the comparison and possible update can be carried out set by set.

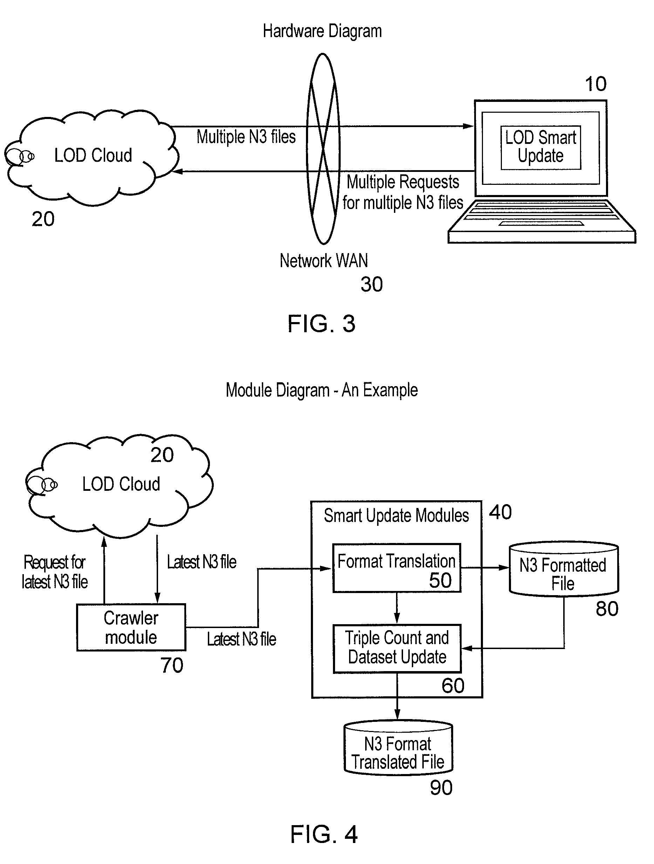

Figure 3 is a schematic hardware diagram showing a system according to invention embodiments. A computer apparatus 10 is provided with modules which can carry out the LOD smart update. The apparatus comprises all the standard functionality including memory, processing, and communications circuitry (not shown) to connect to the internet/ cloud, shown as LOD cloud 20 and to allow user input via a keyboard/GUI etc, and to allow output on the display and other output of results.

The computer sends multiple requests for LOD datasets (in this case N3 files) over a network shown as WAN 30 to the LOD cloud 20 and receives the files in return.

Figure 4 is a module diagram of an invention embodiment. The modules are software modules executed using apparatus 10 to provide the LOD smart update. Smart update modules 40 include a format translation module 50 and triple count and dataset update module 60. Crawler module 70 sends a request for the latest N3 file to the LOD cloud and forwards the provided latest N3 file to the smart update modules. The N3 file is read into the format translation module, which produces an N3 formatted file shown in memory 80. The N3 formatted file is read into the triple count and data set update module 60. The triple counts per set in this file are compared with those of the existing N3 format translated file shown in memory 90, and the existing file dataset is updated only as necessary, in accordance with a different triple count. After the update, the new file can be discarded, and the updated existing file can be stored locally as required.

The following sections give details of the pre-processing/translation functionality and the triple count and dataset update functionality

### Format Translation - Pre-processing for Counting

It can be difficult to count triples against some N3 formatted files. Therefore, before counting, invention embodiments can conduct pre-processing in terms of resolving any format problems in the N3 formatted file.

The format translation function checks the file to recognise the meaning of the notation using N3 format rules and complements (restores) omitted parts. After this complement, the file can be sorted by the subject and checked for unique triples and then the triples can be counted.

There are various technical challenges (for example in the form of omissions, poor ordering and duplications) which can occur in N3 (and other) formatted files, some of which are detailed in Table 1 below, along with the solution to provide full triplets. Table 1 demonstrate the challenges without using N3 notation itself, for simplicity.

The abbreviations used to represent the triples are SN - subject number N, P - predicate number N and O - object number N, where N is an integer counter. The reader will understand that these abbreviations are used in place of actual data for ease of understanding, and that an actual file will probably include further features such as an @prefix namespace section. An abbreviation system for a triple including a literal object which is closer to N3 grammar might be: <URI> <URI> "ON".

**Table 1: Technical challenges in some N3 formatted files and solutions**

| **Technical Challenges for Format Translation** | **Technical Solutions (types of pre-processing needed)** |
|---|---|
| **Challenge-1** | **Pre-processing-1** |
| N3 format always omits the subject, e.g.: | Complement the subject as: |
| | S1 P1 O1 |
| S1 P1 O1 | S1 P2 O2 |
| P2 O2 | S1 P3 O3 |
| P3 O3 | |
| **Challenge-2** | **Pre-processing-2** |
| | Distinguish two objects as: |
| N3 can add two objects in one line, e.g.: | S1 P1 O1 |
| S1 P1 O1,O2 | S1 P1 O2 |
| S1 P2 O3 | S1 P2 O3 |
| **Challenge-3** | **Pre-processing-3** |
| N3 format allows dividing one subject into many pieces, e.g.: | Reorder by subject as: |
| | S1 P1 O1 |
| S1 P1 O1 | S1 P1 O5 |
| S2 P2 O2 | S2 P2 O2 |
| P3 O3,O4 | S2 P3 O3 |
| S1 P1 O5 | S2 P3 O4 |
| **Challenge**-**4** | **Pre-processing-4** |
| Malformed format, e.g.: | Sort by subject (same as pre-processing 3) and check unique triples as: |
| S1 P1 O1 | S1 P1 O1 |
| S2 P2 O2 | S1 P1 O1 * overlap triple |
| S3 P3 O3 | S2 P2 O2 |
| S1 P1 O1 | S3 P3 O3 |

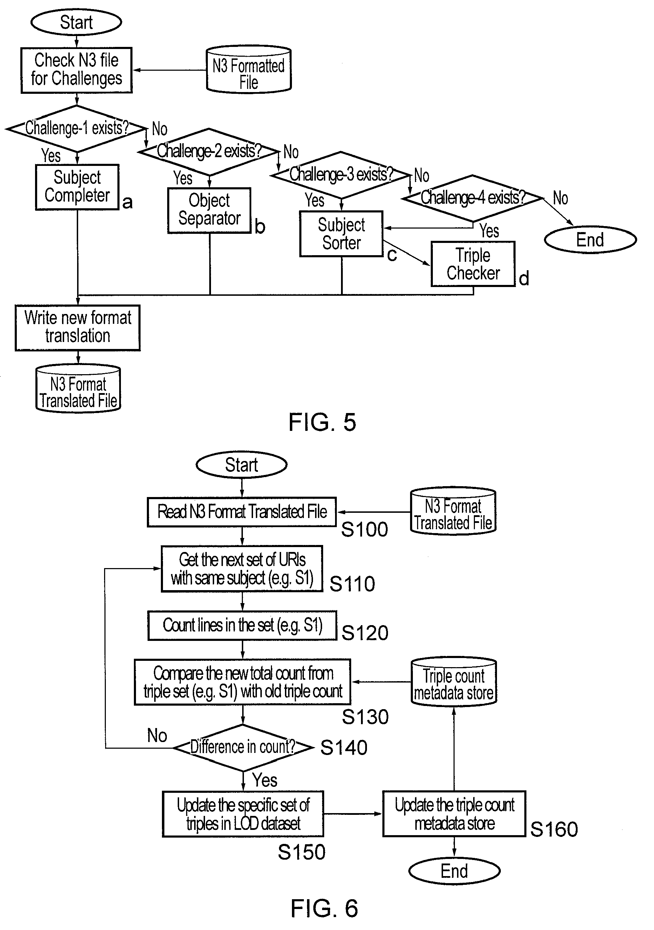

The flow of a format translation mechanism with specific modules which handle pre-processing according to one embodiment is shown in Figure 5. The flow chart shows the challenges listed above in order of Challenge-1 to Challenge-4 (with corresponding modules a) to d) as set out below) but the checks can be carried out in any order.

There are four modules labelled a) to d) shown that perform pre-processing of the N3 formatted file before the update operation takes place. These modules are:

### a) Subject completer (Challenge-1)

The N3 format allows the omission of a subject when you use the same subject in the next line. Therefore, this module adds the subject of the previous line to any triple from which the subject is omitted.

### b) Object separator (Challenge-2)

The N3 format allows writing of more than two objects in one line. Therefore, this module puts each object into a separate line and adds the same subject and predicate to it as in the original line.

### c) Subject sorter (Challenges-3 &-4)

The subject sorter will sort out the two objects in one line with no subject.

In challenge-3, the subject S2 is missing and 02 and 03 are in a single line. It is a different issue from challenge-1 and challenge-2 and is treated separately (not shown).

The N3 format allows writing of the same subject anywhere in the file. Therefore, this module sorts by subject, so that all the triples with the same subject are together. The subject sorter is used after either of Challenge-3 or Challenge-4 are detected, but the triple checker (described below) is only used for Challenge-4.

### d) Triple checker (Challenge-4)

Data sometime includes malformed data like a repeated triple. Therefore, this module detects that type of data and deletes such malformed data.

### Triple Count and Dataset Update

Embodiments of the invention compare old and new versions of the dataset (N3 file) and explore URIs with the same subject, which are counted and compared with the URIs in the old file.

The embodiments may use a local metadata store which holds the number of triples from the old version of a dataset file. If the count number is the same, a pointer is moved to the URIs with the next subject and no update is made. However, if the count is increased or decreased (as shown in Figure 6) then the update function reads and checks each triple related to that particular subject and re-writes (updates) those triples.

The flow of triple count mechanism with specific modules which can perform update for the LOD datasets, is shown in Figure 6. In step S100, the N3 format translated file is read from a store in local memory. In step S110 the next set of URI's with the same subject is fetched (for example S1). In step S120 the process counts the lines in the set. In step S130 the new count is compared with the old triple count for the same subject from a triple count store. In step S140 there is a question as to whether there is a difference in the count. If so, the proves continues at step S150 with an update of the set of triples in the specific set, and an update of the triple count for that set in the triple count store, followed by the retrieval of the next set (not shown) or the end if that was the last set. If not, the process returns to step S110 to retrieve the next set, or ends if that was the last set (not shown).

It can be seen in Figure 6 that the Triple count metadata store is used to compare the total count between the old and new N3 files. After updating the specific triples, the triple counter also updates the Triple count metadata store.

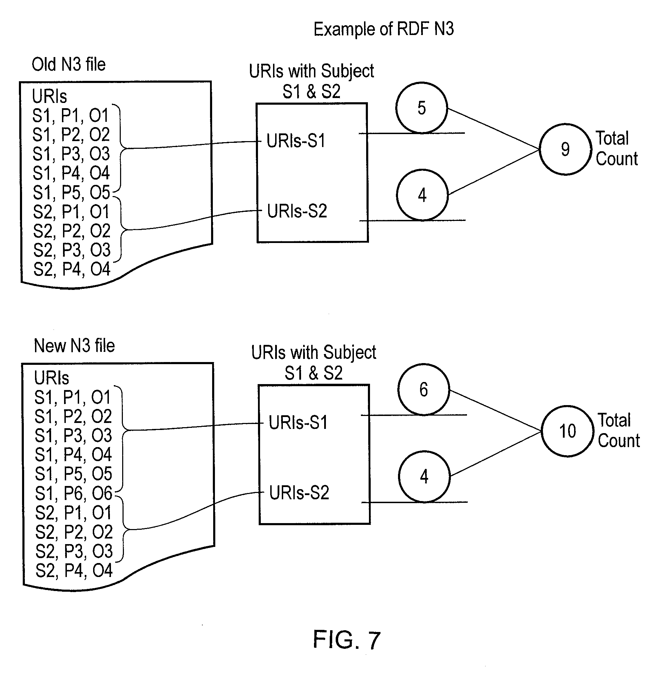

An example of the smart update for LOD datasets is illustrated in Figure 7, which depicts two versions of part of an N3 file, an old version and a new version.

The old version of the file has five triples for URIs with subject S1 and four triples for URIs with subject S2. The system has already saved the number of triples with subject S1 from the old N3 file in a count meta-data triple store: 5 in this example (see Figure 7). When the system reads the new N3 file and compares the total number of triples with subject S1, it will look for the difference in count.

In this example, Figure 7 shows that the number of triples with subject S1 in the new N3 file is 6, which is different to the total number of triples in the old N3 file. Since there is a difference in the count of the triples from the two files, the system will generate a request to update the dataset with only those triples having subject S1 (S1, P6, 06 is added). As shown in Figure 7, for the triples with subject S2, the difference of count is zero between the old N3 file and the new N3 file, which have the same number of triples (in this example it is 4). Therefore, no update will be conducted. For identifying such triples in this embodiment, it is imperative to determine when triples are newly added, by exploiting:
Number of count of the triples with same subject
Number of count of the triples with different subjects

Moreover, the system is capable of conducting part update of the LOD dataset based on a URI count of the triples with the same subjects. The method considers the difference in the old and new version of the dataset N3 file and then performs an update if needed.

Embodiments of the invention can bring the following benefits: -
**User benefits:**
   - A user can conduct bulk update on the LOD datasets in less amount of time
   - A user does not need to update the entire dataset, only update the triples that have been changed
**Technical benefits:**
   - The inventive methodology provides extreme speed-up of the data update operation for LOD datasets.
   - Improved performance of the system

## Claims

1. A computer apparatus arranged to update a file of data having a subject-predicate-object triplet structure using a new file in a compact format, the compact format defining subjects, predicates and objects in a structure which defines triplets without explicitly listing the subject, predicate and object in each triplet, the computer apparatus comprising:
a format translation module arranged to carry out pre-processing to convert the new file in the compact format into an expanded format which always lists each separate subject-predicate-object triplet explicitly including the subject, predicate and object of the triple; and to divide the triples in the expanded format into sets, with one set for each subject; and
a counting and updating module arranged to count the triples in each set to produce a new triple count for that set; to compare the new triple count for each set with a previous triple count for the same set in the file and to update the data in any set of the file if there is a difference between the new and the previous triple count, and not update any set of the file if there is no difference between the new triple count and the previous triple count.

2. A computer apparatus according to claim 1, further comprising:
a crawler module arranged to obtain the new file in the compact format.

3. A computer apparatus according to claim 1 or 2, wherein
the compact and converted formats of the file are N3 or RDF-XML type formats.

4. A computer apparatus according to any of the preceding claims, wherein
the triple count is the number of triples in a set in the expanded file .

5. A computer apparatus according to any of the preceding claims, wherein
the triple count is updated to reflect any updates to the sets in the file.

6. A computer apparatus according to any of the preceding claims, wherein
there is a plurality of potential shortcuts in the compact format which may be converted to provide the expanded format; and there are other potential issues not associated with the compact nature of the format which the conversion can also resolve.

7. A computer apparatus according to any of the preceding claims, wherein
the conversion checks for and remedies omitted subjects, for example where a new line and/or semicolon introduces a new predicate and object for the same subject.

8. A computer apparatus according to any of the preceding claims, wherein
the conversion checks for and remedies multiple objects, for example where a comma separates two or more objects with the same subject and predicate.

9. A computer apparatus according to any of the preceding claims, wherein
the conversion checks for and remedies multiple objects in one line without a subject, for example where a new line introduces a new predicate for the same subject, followed by a two or more objects in the same line.

10. A computer apparatus according to any of the preceding claims, wherein
the conversion checks for and remedies a format in which the instances of the same subject are separated by instances of one or more other subject.

11. A computer apparatus according to any of the preceding claims, wherein
the conversion checks for and remedies overlap triples in the form of two or more instances of the same triple which are discarded to leave one remaining triple before comparing the new triple count for each set with the previous triple count for that set.

12. A computer apparatus according to any of the preceding claims, wherein
the computer apparatus is arranged to download the new file for comparison to the file to be updated, which may be locally stored.

13. A computer-implemented method of updating a file of data having a subject-predicate-object triplet structure using a new file in a compact format, the compact format defining subjects, predicates and objects in a structure which defines triplets without explicitly listing the subject, predicate and object in each triplet; the method comprising:
pre-processing to convert the new file in the compact format into an expanded format which always lists each separate subject-predicate-object triplet explicitly including the subject, predicate and object of the triple;
dividing the triples in the expanded format into sets, with one set for each subject;
counting the triples in each set to produce a new triple count for that set; comparing the new triple count for each set with a previous triple count for the same set in the file; and
updating the data in any set of the file if there is a difference between the new and the previous triple count, and not updating any set of the file if there is no difference between the new triple count and the previous triple count.

14. A computer-implemented method according to claim 13, wherein
at the end of the method the updated file is stored and the new file is discarded.

15. A computer program which when executed carries out a computer-implemented method of updating a file of data having a subject-predicate-object triplet structure using a new file in a compact format, the compact format defining subjects, predicates and objects in a structure which defines triplets without explicitly listing the subject, predicate and object in each triplet; the method comprising
pre-processing to convert the new file in the compact format into an expanded format which always lists each separate subject-predicate-object triplet explicitly including the subject, predicate and object of the triple;
dividing the triples in the expanded format into sets, with one set for each subject;
counting the triples in each set to produce a new triple count for that set; comparing the new triple count for each set with a previous triple count for the same set in the file; and
updating the data in any set of the file if there is a difference between the new and the previous triple count, and not updating any set of the file if there is no difference between the new triple count and the previous triple count.
